# FASCICULE DE BREVET EUROPEEN

(11) **EP 1 396 144 B1**
(45) Date de publication et mention de la délivrance du brevet: **21.12.2005**
(21) Numéro de dépôt: 02735466.1
(22) Date de dépôt: 19.04.2002
(51) Int. Cl.: H04N 5/217

(54) **DISPOSITIF D'IMAGERIE ET PROCEDE DE COMMANDE DU DISPOSITIF**
ABBILDUNGSEINRICHTUNG UND VERFAHREN ZU IHRER STEUERUNG
IMAGING DEVICE AND METHOD FOR CONTROLLING SAME

(30) Priorité: 27.04.2001 FR 0105728
(43) Date de publication de la demande: 10.03.2004
(73) Titulaire: Trixell S.A.S., 38430 Moirans (FR)
(72) Inventeur: RICCARDI, Sébastien, Thales Intellectual Property, 94117 Arcueil Cedex (FR); TEXIER, Vincent, Thales Intellectual Property, 94117 Arcueil Cedex (FR); MICHEL, Marc, Thales Intellectual Property, 94117 Arcueil Cedex (FR)
(74) Mandataire: Collet, Alain
(86) Numéro de dépôt international: PCT/FR2002/001358
(87) Numéro de publication internationale: WO 2002/089466

(56) Documents cités:
- EP-A- 0 886 441
- EP-A- 0 899 946

## Description

L'invention se rapporte à un dispositif d'imagerie et à un procédé de commande du dispositif. Le dispositif comprend des moyens matriciels permettant d'émettre ou de capter une image. Autrement dit, l'invention peut être mise en oeuvre pour tout écran ou caméra matriciel (le).

Les moyens matriciels comportent un grand nombre de points organisés en ligne et en colonne. Les points sont utilisés successivement, ce qui rend le dispositif sensible à des variations temporelles de tensions d'alimentation qui lui fournissent l'énergie nécessaire à son fonctionnement. Pour se prémunir de telles variations temporelles, on a utilisé des alimentations linéaires qui, par nature, sont réputées pour délivrer des tensions continues très stables dans le temps. Les alimentations linéaires sont en général très volumineuses et ne sont donc pas adaptées à des moyens matriciels mobiles. De plus, les alimentations linéaires dissipent une énergie importante. Ces deux inconvénients des alimentations linéaires imposent souvent de les éloigner des moyens matriciels, qu'ils soient mobiles où non, ce qui peut entraîner d'autres perturbations, par exemple de types électromagnétiques dans les câbles de liaison entre l'alimentation et les moyens matriciels.

On a, par ailleurs, tenté d'utiliser des alimentations à découpage pour fournir l'énergie nécessaire au fonctionnement des moyens matriciels, tel que par exemple décrit dans le document EP-A-0 899 946. Ces alimentations sont beaucoup moins volumineuses et moins consommatrices d'énergie que les alimentations linéaires, ce qui permet de les rapprocher des dispositifs matriciels. En conséquence, les perturbations électromagnétiques peuvent être minimisées. En revanche, les tensions fournies par une alimentation à découpage sont beaucoup moins stables temporellement que les tensions fournies par une alimentation linéaire. Par conséquent, l'alimentation à découpage engendre des perturbations importantes des images émises ou captées par les moyens matriciels.

L'invention permet de pallier les différents inconvénients cités plus haut. A cet effet, l'invention a pour objet un dispositif d'imagerie comprenant une alimentation, des moyens d'imagerie matriciels, des moyens de synchronisation, la matrice des moyens d'imagerie matriciels étant balayée à une fréquence de balayage, l'alimentation convertissant une tension continue d'entrée en au moins une tension continue de sortie permettant l'alimentation des moyens d'imagerie matriciels, l'alimentation étant de type à découpage, caractérisé en ce que l'alimentation à découpage est apte à hacher la tension continue d'entrée à une fréquence de découpage et en ce que la fréquence de balayage et la fréquence de découpage sont synchronisées.

L'invention peut être mise en oeuvre quelle que soit la façon de synchroniser les moyens matriciels. A titre d'exemple, on peut utiliser successivement chaque point d'une ligne de la matrice et enchaîner toutes les lignes de la matrice successivement. On peut également utiliser simultanément l'ensemble des points d'une ligne avant d'utiliser la ligne suivante et enchaîner ainsi toutes les lignes de la matrice.

L'invention peut être mise en oeuvre pour des points disposés suivant une unique ligne et plusieurs colonnes pour constituer une barrette.

Les principales variations temporelles de la ou des tensions de sortie de l'alimentation à découpage sont synchronisées sur la fréquence de découpage. En synchronisant la fréquence de balayage des moyens matriciels, les perturbations engendrées par les variations temporelles de la ou des tensions de sortie deviennent répétitives et il est possible de corriger ces perturbations par exemple au moyen d'une image d'offset.

A cet effet, l'invention a pour objet un procédé de commande d'un dispositif d'imagerie comprenant une alimentation, des moyens d'imagerie matriciels, la matrice des moyens d'imagerie matriciels étant balayée à une fréquence de balayage, l'alimentation convertissant une tension continue d'entrée en au moins une tension continue de sortie permettant l'alimentation des moyens d'imagerie matriciels, l'alimentation étant de type à découpage, caractérisé en ce que l'alimentation à découpage hache la tension continue d'entrée à une fréquence de découpage, en ce que la fréquence de balayage et la fréquence de découpage sont synchronisées en ce qu'une image utile est précédée d'une image offset et en ce qu'on applique à l'image utile une correction fonction de l'image d'offset.

L'invention présente un intérêt particulier lorsqu'elle est mise en oeuvre pour une caméra matricielle et que l'on effectue un traitement numérique des données saisies par la caméra, traitement tendant à augmenter le gain de l'image. En effet, ce traitement amplifie à la fois l'image et les perturbations qu'elle contient. Sans mise en oeuvre de l'invention, l'image risquerait d'être masquée sous les perturbations amplifiées par le traitement. A titre d'exemple, ce type de traitement est utilisé pour intensifier une image de faible luminosité ou encore en imagerie médicale réalisée à partir de rayons X afin de visualiser des éléments différents à partir d'une seule exposition du patient aux rayons X. Plus précisément, à partir d'une seule prise de vue, il est possible de réaliser plusieurs images visibles différentes, par exemple pour visualiser des vaisseaux pour une image et des os pour une autre image. Le choix de l'élément à visualiser se fait en augmentant le gain d'une partie des données saisies par la caméra.

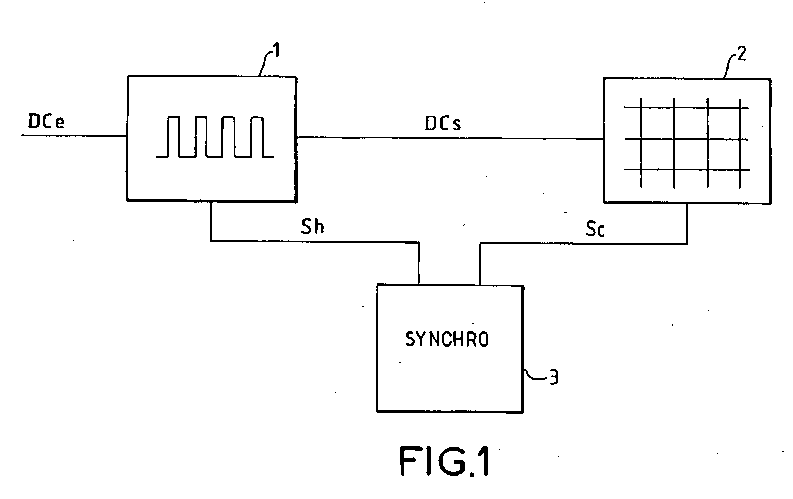

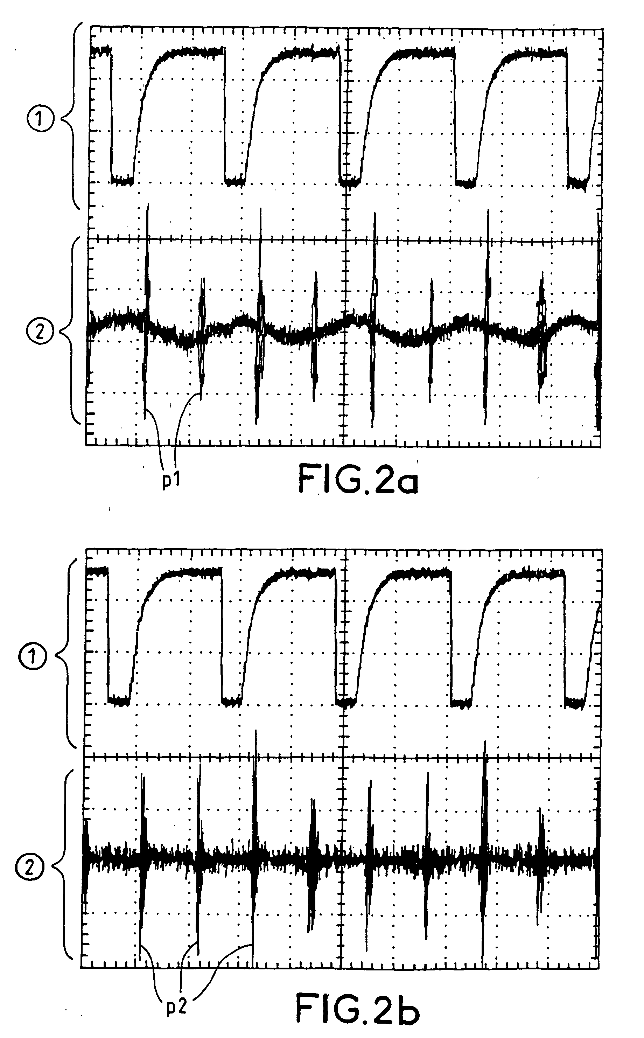

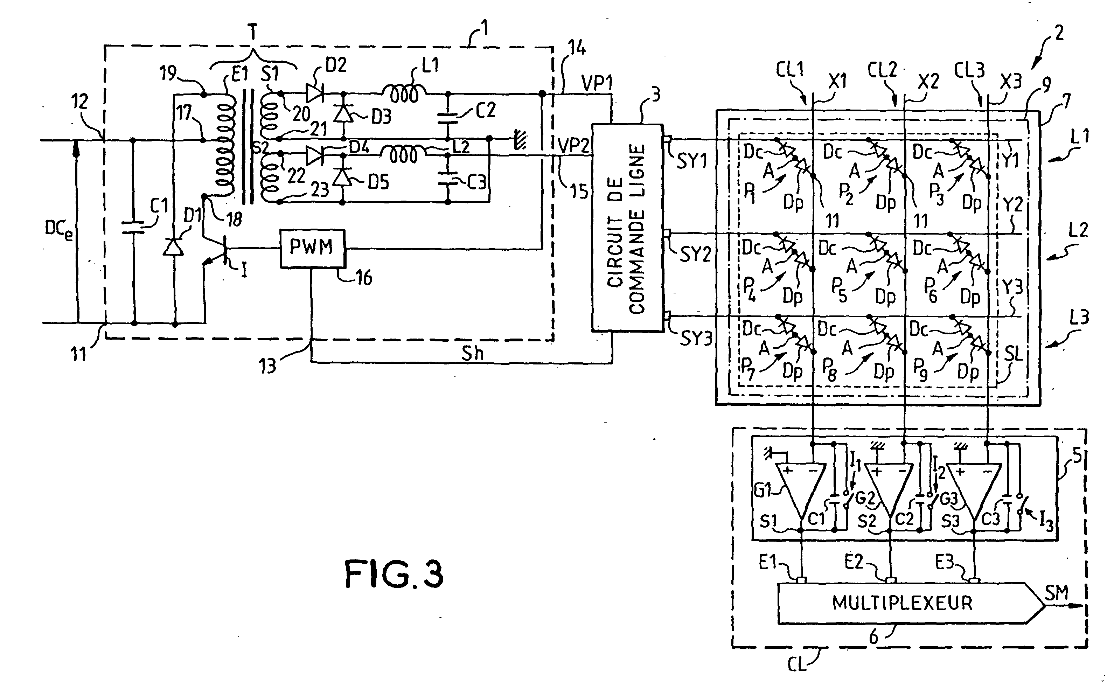

L'invention sera mieux comprise et d'autres avantages apparaîtront à la lecture de la description détaillée d'un mode de réalisation de l'invention, description illustrée par le dessin joint dans lequel :
■ la figure 1 représente, sous forme de bloc diagramme, les différents éléments d'un dispositif conforme à l'invention ;
■ les figures 2a et 2b représentent un exemple de variation temporelle de la tension de sortie d'une alimentation à découpage ;
■ la figure 3 représente, sous forme schématique, un mode de réalisation d'un dispositif comportant des moyens photosensibles matriciels.

Pour simplifier la description, les mêmes éléments porteront les mêmes repères topologiques dans les différentes figures.

Le dispositif représenté figure 1 comporte une alimentation à découpage 1, des moyens matriciels 2 d'imagerie formés d'une matrice de points et des moyens de synchronisation 3. L'alimentation à découpage convertit une tension continue d'entrée Dce pour former au moins une tension continue de sortie DCs qui alimente les moyens matriciels 2. L'alimentation à découpage 1 hache la tension continue d'entrée Dce à une fréquence dite de découpage puis moyenne le signal haché pour former la tension continue de sortie DCs. Une même alimentation à découpage peut fournir plusieurs tensions de sortie DCs en fonction des besoins en énergie des moyens matriciels 2 et des moyens de synchronisation. Les moyens de synchronisation 3 fournissent aux moyens matriciels 2 un signal Sc de synchronisation dont la fréquence dite de balayage permet de séquencer l'utilisation des différents points des moyens matriciels 2. Les moyens de synchronisation 3 fournissent à l'alimentation à découpage 1 un signal Sh de hachage. La fréquence de découpage du signal Sh est fonction de la fréquence de balayage.

A titre d'exemple, l'image définie par les moyens matriciels est balayée à une fréquence de 50 Hertz et la fréquence de découpage est de l'ordre de 200 kilo-Hertz. Les moyens de synchronisation définissent alors la fréquence de découpage comme un multiple de la fréquence de balayage. La réalisation de l'alimentation à découpage 1 peut imposer une plage de fréquence à respecter pour la fréquence de découpage. Dans ce cas, on choisit le multiple défini plus haut pour que la fréquence de balayage multipliée par ce multiple soit comprise dans la plage.

En réalisant la tension de sortie continue DCs à partir du hachage de la tension d'entrée continue, puis en moyennant le signal haché, la tension de sortie continue DCs comporte des perturbations synchronisées sur la fréquence de hachage. Ces perturbations sont fonction de l'énergie fournie par l'alimentation à découpage.

A titre d'exemple, la figure 2a représente l'observation faite sur l'écran d'un oscilloscope des perturbations de la tension de sortie DCs. Sur un premier canal ① de l'oscilloscope, on visualise le signal de hachage Sh. Ce signal est périodique en forme de créneaux à la fréquence de découpage. Sur un deuxième canal ②, on visualise le signal DCs. L'échelle de représentation est de l'ordre du millivolt par division. Le signal DCs est synchronisé sur le signal Sh présent sur le premier canal ① et il présente une ondulation à la fréquence de découpage. Le signal DCs présente de plus des pics p1 synchronisés également sur la fréquence de découpage.

Par ailleurs, à la figure 2b, on visualise le champ magnétique rayonné au voisinage de l'alimentation à découpage. Comme pour la figure 2a, on visualise sur le canal ① de l'oscilloscope le signal de hachage Sh. Par contre, sur le canal ② on visualise une tension se développant aux bornes d'une inductance de quelques spires, inductance placée au voisinage immédiat de l'alimentation à découpage. La tension relevée aux bornes de l'inductance, donne une image du champ magnétique rayonné par l'alimentation à découpage. La tension visualisée sur le canal ② présente des pics p2 synchronisés sur le signal de hachage Sh.

En synchronisant le balayage des moyens matriciels 2 et le hachage de l'alimentation à découpage, les perturbations conduites ou rayonnées par l'alimentation se retrouveront aux mêmes points des moyens d'imagerie matriciels 2 pour chaque image émise ou reçue.

Le dispositif représenté figure 3 comprend une alimentation à découpage 1, des moyens d'imagerie matriciels et des moyens de synchronisation 3. L'alimentation à découpage 1 reçoit la tension d'entrée continue Dce entre deux bornes d'entrée 11 et 12, ainsi que le signal de synchronisation Sc sur une borne d'entrée 13. L'alimentation à découpage 1 délivre deux tensions continues VP1 et VP2 respectivement sur deux bornes de sortie 14 et 15. L'alimentation à découpage 1 comporte un transformateur T comprenant un enroulement primaire E1 et deux enroulements secondaires S1 et S2, trois condensateurs C1 à C3, cinq diodes D1 à D5, deux inductances L1 et L2, un interrupteur électronique I et des moyens de commande 16 de l'interrupteur électronique I.

Le condensateur C1 est raccordé entre les bornes 11 et 12. La borne 12 est raccordée à une borne intermédiaire 17 de l'enroulement primaire E1. La borne 11 est raccordée à l'anode de la diode D1 et a une première borne d'extrémité 18 de l'enroulement primaire E1 par l'intermédiaire de l'interrupteur électronique I. La cathode de la diode D1 est raccordée à une seconde borne d'extrémité 19 de l'enroulement primaire E1. La diode D1 permet d'éviter que des surtensions ne se forment entre les bornes de l'enroulement primaire E1.

L'anode de la diode D2 est raccordée à une première borne 20 de l'enroulement secondaire S1 et l'anode de la diode D3 est raccordée à une seconde borne 21 de l'enroulement secondaire S1. Les cathodes des deux diodes D2 et D3 sont toutes deux raccordées à une première borne de l'inductance L1. La seconde borne de l'inductance L2 forme la borne de sortie 14 et est raccordée à la seconde borne 23 de l'enroulement secondaire S2 par l'intermédiaire du condensateur C2. Les diodes D4 et D5, l'inductance L2 et le condensateur C2 redressent un courant alternatif circulant dans l'enroulement secondaire S1 pour former la tension continue VP1.

De même, l'anode de la diode D4 est raccordée à une première borne 22 de l'enroulement secondaire S2 et l'anode de la diode D5 est raccordée à une seconde borne 23 de l'enroulement secondaire S2. Les cathodes des deux diodes D4 et D5 sont toutes deux raccordées à une première borne de l'inductance L2. La seconde borne de l'inductance L1 forme la borne de sortie 15 et est raccordée à la seconde borne 21 de l'enroulement secondaire S1 par l'intermédiaire du condensateur C3. Les diodes D2 et D3, l'inductance L1 et le condensateur C3 redressent un courant alternatif circulant dans l'enroulement secondaire S1 pour former la tension continue VP2.

Les moyens de commande 16 de l'interrupteur électronique I reçoivent des moyens de synchronisation 3 le signal de hachage Sh. Les moyens de commande 16 reçoivent également la tension VP1. Les moyens 16 ouvrent et ferment l'interrupteur I à la fréquence du signal Sh de façon à créer un courant alternatif dans l'enroulement primaire E1. Ce courant génère d'autres courants alternatifs dans les enroulements secondaires S1 et S2. La tension VP1 est régulée en adaptant le rapport entre la durée pendant laquelle l'interrupteur I est fermé par rapport à la durée pendant laquelle l'interrupteur I est ouvert. Cette régulation est effectuée par les moyens 16 en fonction de la tension VP1 qu'ils reçoivent. Ce mode de régulation est connu dans la littérature anglo-saxonne sous le nom de « Pulse With Modulation » (Modulation par largeur d'amplitude).

A titre d'alternative, il est possible de remplacer les diodes D3 et D5 par des interrupteurs électroniques par exemple de type MOS FET commandés par les moyens 16.

Les moyens d'imagerie matriciels 2 comportent des points photosensibles P1 à P9, formés chacun par une diode photosensible Dp et une diode de commutation Dc montées en série suivant une configuration tête-bêche. Les moyens d'imagerie matriciels 2 comportent des conducteurs en ligne Y1 à Y3 croisés avec des conducteurs en colonne X1 à X3, avec à chaque croisement, un point photosensible connecté entre un conducteur ligne et un conducteur colonne. Les points photosensibles P1 à P9 sont ainsi disposés suivant des lignes L1 à L3 et des colonnes CL1 à CL3.

Dans l'exemple de la figure 2, seulement 3 lignes et 3 colonnes sont représentées qui définissent 9 points photosensibles, mais une telle matrice peut avoir une capacité beaucoup plus grande, pouvant aller jusqu'à plusieurs millions de points. Il est courant par exemple de réaliser de telles matrices ayant des points photosensibles disposés suivant 3000 lignes et 3000 colonnes (dans une surface de l'ordre de 40 cm x 40 cm), ou bien disposés suivant une unique ligne et plusieurs colonnes pour constituer une barrette de détection.

Le dispositif photosensible comporte des moyens de synchronisation 3 formant un circuit de commande ligne, dont des sorties SY1, SY2, SY3 sont reliées respectivement aux conducteurs ligne Y1, Y2, Y3. Le circuit de commande ligne 3 dispose de différents éléments (non représentés), tels que par exemple, circuit d'horloge, circuits de commutation, registre à décalage, qui lui permettent de réaliser un adressage séquentiel des conducteurs lignes Y1 à Y3, ainsi que la génération du signal de hachage Sh. Le circuit de commande ligne 3 reçoit la tension VP1 servant à définir l'amplitude d'impulsions de polarisation appliquées aux conducteurs lignes et une source, ainsi que la tension VP2 servant à définir l'amplitude d'impulsions de lecture appliquées aux conducteurs lignes. Ces deux tensions peuvent éventuellement être confondues.

Dans chaque point photosensible P1 à P9, les deux diodes Dp, Dc sont reliées entre elles soit par leur cathode, soit par leur anode comme dans l'exemple représenté. La cathode de la photodiode Dp est reliée à un conducteur colonne X1 à X3, et la cathode de la diode de commutation Dc est reliée à un conducteur ligne Y1 à Y3.

Les conducteurs colonne X1 à X3 sont reliés à un circuit de lecture CL, comprenant par exemple un circuit intégrateur 5, et un circuit multiplexeur 6 formé par exemple d'un registre à décalage à entrées parallèles et sortie série pouvant être du type C.C.D (de l'anglais " Charge Coupled Device "). Chaque conducteur colonne est relié à une entrée négative " - " d'un amplificateur G1 à G3 monté en intégrateur. Une capacité d'intégration C1 à C3 est montée entre l'entrée négative " - " et une sortie S1 à S3 de chaque amplificateur. La seconde entrée " + " de chaque amplificateur G1 à G3 est reliée à un potentiel qui dans l'exemple est le potentiel de référence Vr, potentiel qui par suite est imposé à tous les conducteurs colonne X1 à X3. Chaque amplificateur comporte un élément interrupteur I1 à I3 dit de remise à zéro (constitué par exemple par un transistor du type MOS), monté en parallèle avec chaque capacité d'intégration C1 à C3.

Les sorties S1 à S3 des amplificateurs sont reliées aux entrées E1 à E3 du multiplexeur 6. Cette disposition classique permet de délivrer " en série " et ligne après ligne, (L1 à L3) en sortie SM du multiplexeur 6, des signaux qui correspondent aux charges accumulées aux points "A" de tous les points photosensibles P1 à P9.

Il est à noter qu'il est connu aussi, pour remplir la fonction d'interrupteur qui, dans l'exemple de la figure 2, est tenue par la diode de commutation Dc, d'utiliser un transistor ; ce dernier présente par rapport à la diode une plus grande complexité de connexion, mais il offre des avantages dans la qualité de son état " passant ".

Pour obtenir une image utile de qualité optimale, on effectue une correction de l'image utile à partir d'une image dite d'offset connue sous la dénomination française d'image noire généralement prise et stockée en début d'un cycle de fonctionnement. Cette image d'offset est l'image obtenue alors que le dispositif photosensible est exposé à un signal d'intensité nulle et correspond à une sorte d'image de fond. L'image d'offset varie en fonction de l'état électrique des composants des points photosensibles et de la dispersion de leurs caractéristiques électriques et bien entendu de leur tension d'alimentation. L'image utile est celle lue alors que le dispositif photosensible a été exposé à un signal utile qui correspond à une exposition à un rayonnement électromagnétique. Elle englobe l'image d'offset. La correction consiste à effectuer une soustraction entre l'image utile et l'image d'offset.

## Revendications

1. Dispositif d'imagerie comprenant une alimentation (1), des moyens d'imagerie matriciels (2), la matrice des moyens d'imagerie matriciels étant balayée à une fréquence de balayage, l'alimentation (1) convertissant une tension continue d'entrée (Dce) en au moins une tension continue de sortie (DCs) permettant l'alimentation des moyens d'imagerie matriciels (2), l'alimentation (1) étant de type à découpage, **caractérisé en ce que** l'alimentation à découpage (1) est apte à hacher la tension continue d'entrée (Dce) à une fréquence de découpage et **en ce que** la fréquence de balayage et la fréquence de découpage sont synchronisées.

2. Dispositif d'imagerie selon la revendication 1, **caractérisé en ce que** l'alimentation à découpage (1) est apte à hacher la tension continue d'entrée (Dce) à une fréquence de découpage multiple de la fréquence de balayage.

3. Dispositif d'imagerie selon l'une des revendications 1 ou 2, **caractérisé en ce qu'**il comprend en outre des moyens de synchronisation (3), **en ce que** les moyens de synchronisation (3) est apte à fournir aux moyens d'imagerie matriciels (2) un signal (Sc) dont la fréquence est la fréquence de balayage, et **en ce que** les moyens de synchronisation (3) est apte à fournir à l'alimentation à découpage (1) un signal (Sh) à la fréquence de découpage.

4. Procédé de commande d'un dispositif d'imagerie comprenant une alimentation (1), des moyens d'imagerie matriciels (2), des moyens de synchronisation (3), la matrice des moyens d'imagerie matriciels étant balayée à une fréquence de balayage, l'alimentation (1) convertissant une tension continue d'entrée (Dce) en au moins une tension continue de sortie (DCs) permettant l'alimentation des moyens d'imagerie matriciels (2), l'alimentation (1) étant de type à découpage, **caractérisé en ce que** l'alimentation à découpage (1) hache la tension continue d'entrée (Dce) à une fréquence de découpage, **en ce que** la fréquence de balayage et la fréquence de découpage sont synchronisées, **en ce qu'**une image utile est précédée d'une image offset et **en ce qu'**on applique à l'image utile une correction fonction de l'image d'offset.

5. Procédé de commande selon la revendication 4, **caractérisé en ce que** ladite correction consiste à soustraire l'image d'offset de l'image utile.

## Patentansprüche

1. Bilderzeugungsvorrichtung mit einer Stromversorgung (1) und mit Matrix-Bilderzeugungsmitteln (2), wobei die Matrix der Matrix-Bilderzeugungsmittel mit einer Tastfrequenz getastet wird, wobei die Stromversorgung (1) eine Eingangsgleichspannung (DCe) in mindestens eine Ausgangsgleichspannung (DCs) umwandelt, was die Stromversorgung der Matrix-Bilderzeugungsmittel (2) ermöglicht, wobei die Stromversorgung (1) vom Typ getaktete Stromversorgung ist, **dadurch gekennzeichnet, dass** die getaktete Stromversorgung (1) in der Lage ist, die Eingangsgleichspannung (DCe) mit einer Zerhackerfrequenz zu zerhacken, und dass die Tastfrequenz und die Zerhackerfrequenz synchronisiert sind.

2. Bilderzeugungsvorrichtung nach Anspruch 1, **dadurch gekennzeichnet, dass** die getaktete Stromversorgung (1) in der Lage ist, die Eingangsgleichspannung (DCe) mit einer Zerhackerfrequenz zu zerhacken, die ein Vielfaches der Tastfrequenz ist.

3. Bilderzeugungsvorrichtung nach einem der Ansprüche 1 oder 2, **dadurch gekennzeichnet, dass** sie außerdem Synchronisationsmittel (3) aufweist, dass die Synchronisationsmittel (3) in der Lage sind, den Matrix-Bilderzeugungsmitteln (2) ein Signal (Sc) zu liefern, dessen Frequenz die Tastfrequenz ist, und dass die Synchronisationsmittel (3) in der Lage sind, an die getaktete Stromversorgung (1) ein Signal (Sh) mit der Zerhackerfrequenz zu liefern.

4. Verfahren zur Steuerung einer Bilderzeugungsvorrichtung, die eine Stromversorgung (1), Matrix-Bilderzeugungsmittel (2) und Synchronisationsmittel (3) aufweist, wobei die Matrix der Matrix-Bilderzeugungsmittel mit einer Tastfrequenz getastet wird, wobei die Stromversorgung (1) eine Eingangsgleichspannung (DCe) in mindestens eine Ausgangsgleichspannung (DCs) umwandelt, was die Stromversorgung der Matrix-Bilderzeugungsmittel (2) ermöglicht, wobei die Stromversorgung (1) vom Typ getaktete Stromversorgung ist, **dadurch gekennzeichnet, dass** die getaktete Stromversorgung (1) die Eingangsgleichspannung (DCe) mit einer Zerhackerfrequenz zerhackt, dass die Tastfrequenz und die Zerhackerfrequenz synchronisiert sind, dass vor einem Nutzbild ein Offset-Bild liegt und dass an das Nutzbild eine vom Offset-Bild abhängige Korrektur angewendet wird.

5. Steuerverfahren nach Anspruch 4, **dadurch gekennzeichnet, dass** die Korrektur darin besteht, das Offset-Bild vom Nutzbild zu subtrahieren.

## Claims

1. Imaging device comprising a power supply (1), matrix imaging means (2), the matrix of the matrix imaging means being scanned at a scanning frequency, the power supply (1) converting a DC input voltage (Dce) into at least one DC output voltage (DCs) allowing the powering of the matrix imaging means (2), the power supply (1) being of chopped type, **characterized in that** the chopped power supply (1) is able to chop the DC input voltage (Dce) at a chopping frequency, and **in that** the scanning frequency and the chopping frequency are synchronized.

2. Imaging device according to Claim 1, **characterized in that** the chopped power supply (1) is able to chop the DC input voltage (Dce) at a chopping frequency that is a multiple of the scanning frequency.

3. Imaging device according to one of Claims 1 and 2, **characterized in that** it furthermore comprises synchronization means (3), **in that** the synchronization means (3) are able to provide the matrix imaging means (2) with a signal (Sc) whose frequency is the scanning frequency, and **in that** the synchronization means (3) are able to provide the chopped power supply (1) with a signal (Sh) at the chopping frequency.

4. Process for controlling an imaging device comprising a power supply (1), matrix imaging means (2), synchronization means (3), the matrix of the matrix imaging means being scanned at a scanning frequency, the power supply (1) converting a DC input voltage (Dce) into at least one DC output voltage (DCs) allowing the powering of the matrix imaging means (2), the power supply (1) being of chopped type, **characterized in that** the chopped power supply (1) chops the DC input voltage (Dce) at a chopping frequency, and **in that** the scanning frequency and the chopping frequency are synchronized, **in that** a useful image is preceded by an offset image and **in that** a correction dependent on the offset image is applied to the useful image.

5. Control process according to Claim 4, **characterized in that** the said correction consists in subtracting the offset image from the useful image.
